# EUROPÄISCHE PATENTANMELDUNG

(11) **EP 2 392 209 A1**
(43) Veröffentlichungstag der Anmeldung: **07.12.2011**
(21) Anmeldenummer: 11401526.6
(22) Anmeldetag: 24.05.2011
(51) Int. Cl.: A01M 7/00

(54) **Landwirtschaftliche Verteilmaschine**

(30) Priorität: 02.06.2010 DE 102010017204
(71) Anmelder: Amazonen-Werke H. Dreyer GmbH & Co. KG, 49205 Hasbergen (DE)
(72) Erfinder: Oberheide, Friedrich, 49143 Bissendorf (DE)

(57) **Zusammenfassung**

Verteilergestänge (1) für eine Verteilmaschine mit einem Mittelteil und sich hieran beidseitig mittels Gelenken angeordneten und mittels Gelenke (4) miteinander verbundenen und aus Teilsegmenten (2,3) bestehenden und zusammenfaltbaren Seitenauslegern, wobei den aus- und zusammenfaltbaren Teilsegmenten jeweils motorisch angetriebene Stellelemente (11) zu Ein- und Ausfalten der Teilsegmente zugeordnet sind. Um ein das Verteilergestänge schonendes Ein- und Ausfalten der Teilsegmente zu ermöglichen, ist vorgesehen, dass die Stellelemente Mittel zur Erzeugung zumindest einer reduzierten Faltgeschwindigkeitsphase zumindest in der Endphase des Einfaltvorganges zumindest des jeweils äußeren Teilsegmentes des Verteilergestänges aufweisen.

## Beschreibung

Die Erfindung betrifft ein Verteilergestänge gemäß des Oberbegriffes des Patentanspruches 1.

Ein derartiges Verteilergestänge ist durch die DE 33 42 962 A1, die DE 41 38 213 A1 oder DE 1 962 295 U1 bekannt. Zwischen den jeweiligen Teilsegmenten des Verteilergestänges sind motorisch angetriebene Stellelemente zum Ein- und Ausfalten der Teilsegmente angeordnet. Insbesondere am Ende des Ein- oder Ausfaltvorganges der Teilsegmente bewegen sich die Segmente jeweils noch mit einer relativ hohen Geschwindigkeit und werden dann am Ende des jeweiligen Vorganges abrupt abgebremst, so dass beim Einfalten der Teilsegmente diese mit großer Wucht gegen einander schlagen. Dieses ist unerwünscht.

Eine weitere Art von Verteilergestängen sind durch die DE 34 07 054 A1 und DE 28 08 591 A1 bekannt. Hier ist für jede Seite des Verteilergestänges ein motorisches Stellelement vorgesehen. Den die Teilsegmente miteinander verbindenden Gelenken sind Kreissegmente zugeordnet, über welche als Seile ausgebildete Zugelemente geführt sind, um die Teilsegmente zu einander Ein- und Ausfalten zu können. Auch hier treten die vorgeschilderten Probleme auf, dass am Ende des jeweiligen Faltvorganges die Teilsegmente abrupt abgebremst werden.

Der Erfindung liegt die Aufgabe zu Grunde, ein das Verteilergestänge schonendes Ein- und Ausfalten der Teilsegmente zu ermöglichen.

Diese Aufgabe wird erfindungsgemäß dadurch gelöst, dass die Stellelemente Mittel zur Erzeugung zumindest einer reduzierten Faltgeschwindigkeitsphase zumindest in der Endphase des Einfaltvorganges zumindest des jeweils äußeren Teilsegmentes des Verteilergestänges aufweisen. Infolge dieser Maßnahme bewegen sich die Teilsegmente des Verteilergestänges in der Endphase des Einfaltvorganges nur noch mit verminderter Geschwindigkeit aufeinander zu, so dass ein schonendes Einfalten des Verteilergestänges in sehr einfacher Weise erreicht wird.

Eine einfache Ausgestaltung der Stellelemente ergibt sich dadurch, dass in die Stellelemente als zusammenwirkende Ketten- oder Zahnradsegmente ausgebildet sind.

Die reduzierte Faltgeschwindigkeit lässt sich in der jeweiligen Endphase des Einfalt- und Ausfaltvorganges dadurch erreichen, dass die Mittel der Stellelemente als unrunde und/oder ovale Ketten- oder Zahnradsegmente ausgebildet sind.

Die reduzierte Faltgeschwindigkeit wird mittels der Ketten und Zahnradsegmente dadurch erreicht, dass die Ketten- oder Zahnradsegmente einen sich zumindest über den Ein- und Ausfaltbereich der Teilsegment verändernden Wirkabstand zur Gelenksachse des die beiden Teilsegmente miteinander verbindenden Gelenkes aufweisen.

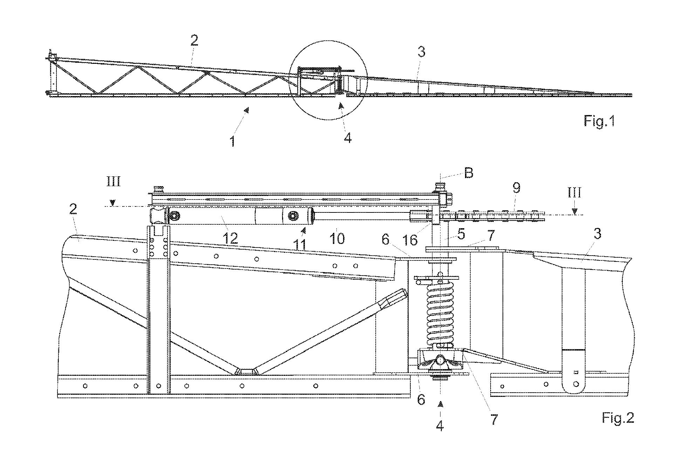

Weitere Einzelheiten der Erfindung sind der
Beispielsbeschreibung und den Zeichnungen zu entnehmen. Hierbei zeigen
- Fig. 1: die beiden äußeren Teilsegmente der in Fahrtrichtung gesehen linke Hälfte des Verteilergestänges einer als landwirtschaftlichen Pflanzenschutzspritze ausgebildeten Verteilmaschine,
- Fig. 2: das die beiden Teilsegmente des Verteilergestänge verbindende Gelenk gemäß Fig. 1 im vergrößerten Maßstab,

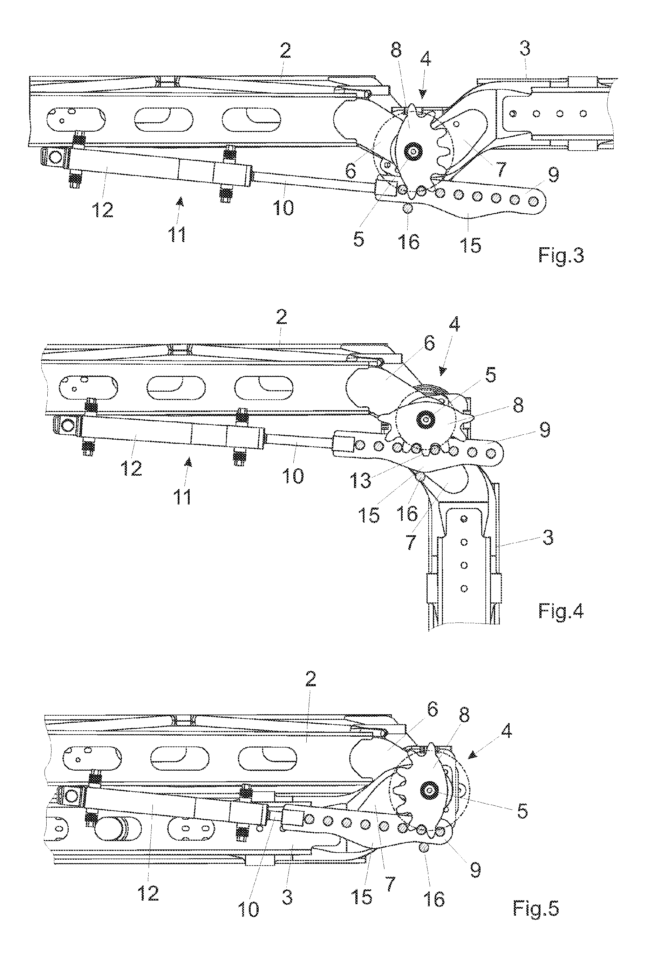

- Fig. 3: das die beiden Teilsegmente des Verteilergestänge verbindende Gelenk in der Ansicht III - III in ausgefalteter Arbeitsstellung,
- Fig. 4: das die beiden Teilsegmente des Verteilergestänge verbindende Gelenk in der Ansicht gemäß Fig. 3 in halb ein- oder ausgefalteter Zwischenstellung,
- Fig. 5: das die beiden Teilsegmente des Verteilergestänge verbindende Gelenk in der Ansicht III - III in eingefalteter Transportstellung und
- Fig. 6: das Zahnradsegment in der Ansicht III - III im vergrößerten Maßstab.

Das Verteilergestänge 1 einer landwirtschaftlichen Feldspritze ist in mehrere Teilsegmente 2 und 3 unterteilt, die jeweils durch Gelenke 4 aufweisende Gelenkverbindungen miteinander verbunden und zueinander ein- und ausfaltbar sind. Die Teilsegmente 2 und 3 sind Teil des ein Mittelteil, das nicht dargestellt ist, aufweisenden Verteilergestänges 1. Dem Verteilergestänge 1 ist nicht dargestellte landwirtschaftlichen Pflanzenschutz- und/oder Feldspritzleitungen zugeordnet. An diesen Leitungen sind als Düsen ausgebildete Ausbringelemente angeordnet.

Das Gelenk 4, welches die beiden Teilsegmenten 2 und 3 miteinander verbindet, weist eine als Schwenkwelle 5 ausgebildete Welle auf. Diese Welle 5 ist verdrehbar in an dem Teilsegment 2 angeordneten Gelenklaschen 6 gelagert.

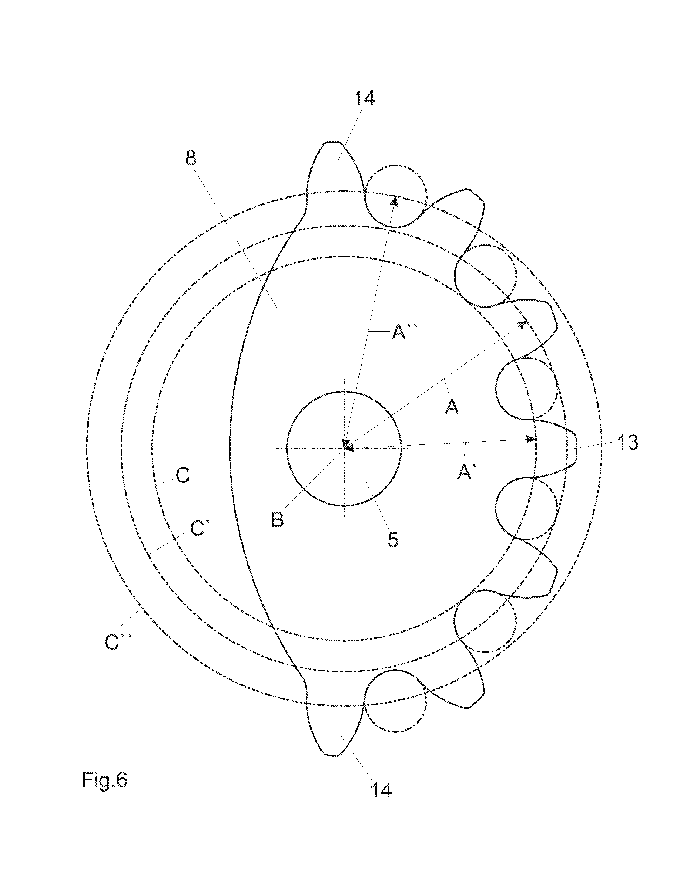

Weiterhin ist diese Welle 5 drehfest mit den
Gelenkhalterungen 7 des äußeren Teilsegmentes 3 verbunden. An dem oberen Ende der Schwenkwelle 5 ist ein Zahnradsegment 8 drehfest angeordnet. Dieses Zahnradsegment 8 wirkt mit einer Zahnstange 9 zusammen. Die Zahnstange 9 ist am Ende des Kolbens 10 eines als Hydraulikzylinder 11 ausgebildeten motorisches Stellelementes angeordnet. Der Zylinder 12 des Hydraulikzylinders 11 ist an dem Teilsegment 2 des Verteilergestänges 1 befestigt. Das Zahnradsegment 8 weist einen sich zumindest über den Ein- und Ausfaltbereich des äußeren Teilsegmentes 3 sich verändernden Wirkabstand A zur Gelenksachse B, die mit der Mittelachse der Schwenkwelle 5 zusammenfällt, des die beiden Teilsegmente 2 und 3 miteinander verbindenden Gelenkes 4 auf. Der Wirkabstand A' ist in der Mitte 13 des Zahnradsegmentes 8 kleiner als der Wirkabstand A" in den beiden äußeren Bereichen 14, die sich gegenüber liegen, des Zahnradsegmentes 8 auf. Um die Veränderung der Wirkabstände A, A', A" deutlicher darstellen zu können, sind die zugehörigen Wirkkreise C, C', C" in Fig. 6 eingezeichnet. Wie insbesondere in Fig. 6 erkennbar ist, ist das Zahnradsegment 8 oval ausgebildet.

Durch das oval ausgebildete Zahnradsegment 8 werden Mittel zur Erzeugung zumindest einer reduzierten
Fallgeschwindigkeitsphase zumindest in der Endphase des Einfaltvorganges des hier im Ausführungsbeispiel dargestellten äußeren Teilsegmentes 3 des Verteilergestänges 1 geschaffen. Durch die unterschiedlichen Wirkabstände A, A', A" dem als mit der Zahnstange 9 zusammenwirkenden ovalen Zahnradsegment 8 ausgebildeten Mittel wird jeweils eine reduzierte Faltgeschwindigkeitsphase an dem jeweiligen Beginn und dem jeweiligen Ende des Einfalt- oder Ausfaltvorganges des Teilsegmentes 3 erreicht. Hierdurch wird jeweils einerseits ein schonendes Einleiten des Einfalt- oder Ausfaltvorganges sowie Beenden des Einfalt- oder Ausfaltvorganges erreicht, so dass ein schonendes Ein- und Ausfalten des Teilsegmentes 3 erreicht wird. Das Teilsegment 3 wird so am jeweiligen Ende des Einfalt- oder Ausfaltvorganges durch die Ausgestaltung des Zahnradsegmentes 8 langsam und schonend in die jeweilige Endphase überführt. Das Teilsegment 3 schlägt somit nicht mit großer Kraft gegen das benachbarte Teilsegment 2 an.

Damit die Verzahnung der Zahnstange 9 in die Verzahnung des Zahnradsegmentes 8 auch bei dem oval ausgestalteten Zahnradsegment8 immer sicher ineinandergreifen, weist die Zahnstange 9 eine entsprechend ausgebildete verdickte Form auf, die Zahnstange 9 ist in dem Bereich 15, der mit dem mittleren Bereich 13 des Zahnradsegmentes 8 zusammenwirkt, verbreitert ausgebildet. Durch eine den Stellelementen zugeordneten und am Teilsegment 3 angeordneten Führungselement 16 wird die Verzahnung der Zahnstange 9 immer in gewünschter zusammenwirkender Weise gegen die Verzahnung des Zahnradsegmentes 8 gedrückt bzw. miteinander in Verbindung gehalten.

Anstelle der Ausgestaltung der Mittel der Stellelemente als Zahnradsegmente 8, 9 können diese auch als Kettenrad-und/oder Kettensegmente ausgestaltet sei. Auch andere Wirkmittel, wie ovale Scheiben, sind möglich.

## Patentansprüche

1. Verteilergestänge für eine Verteilmaschine mit einem Mittelteil und sich hieran beidseitig mittels Gelenken angeordneten und mittels Gelenke miteinander verbundenen und aus Teilsegmenten bestehenden und zusammenfaltbaren Seitenauslegern, wobei den aus- und zusammenfaltbaren Teilsegmenten jeweils motorisch angetriebene Stellelemente zu Ein- und Ausfalten der Teilsegmente zugeordnet sind, **dadurch gekennzeichnet, dass** die Stellelemente Mittel (8, 9) zur Erzeugung zumindest einer reduzierten Faltgeschwindigkeitsphase zumindest in der Endphase des Einfaltvorganges zumindest des jeweils äußeren Teilsegmentes (3) des Verteilergestänges (1) aufweisen.

2. Verteilergestänge nach Anspruch 1, **dadurch gekennzeichnet, dass** in die Stellelemente als zusammenwirkende Ketten- oder Zahnradsegmente (8, 9) ausgebildet sind.

3. Verteilergestänge nach zumindest einem der vorstehenden Ansprüche, **dadurch gekennzeichnet, dass** die Mittel der Stellelemente als unrunde und/oder ovale Ketten- oder Zahnradsegmente (8, 9) ausgebildet sind.

4. Verteilergestänge nach zumindest einem der vorstehenden Ansprüche, **dadurch gekennzeichnet, dass** die Ketten- oder Zahnradsegmente 88, 9) einen sich zumindest über den Ein- und Ausfaltbereich des Teilsegmentes (3) verändernden Wirkabstand (A, A', A") zur Gelenksachse (B)des die beiden Teilsegmente (2, 3) miteinander verbindenden Gelenkes (4) aufweisen.
